# EUROPÄISCHE PATENTANMELDUNG

(11) **EP 4 648 183 A1**
(43) Veröffentlichungstag der Anmeldung: **12.11.2025**
(21) Anmeldenummer: 25171018.2
(22) Anmeldetag: 16.04.2025
(51) Int. Cl.: H01M 50/103, H01M 50/342

(54) **ZELLGEHÄUSE FÜR EINEN BATTERIEZELLKÖRPER**

(30) Priorität: 24.04.2024 DE 102024111496
(71) Anmelder: HOERBIGER Antriebstechnik Holding GmbH, 86956 Schongau (DE)
(72) Erfinder: Reumüller, Christian, 86956 Schongau (DE); Sedlmair, Martin, 86956 Schongau (DE)
(74) Vertreter: Prinz & Partner mbB

(57) **Zusammenfassung**

Ein Zellgehäuse (10) für einen Batteriezellkörper (12), mit Seitenwänden (14, 16) und einer an einer der Seitenwände (14, 16) angeordneten Berstvorrichtung (22). Die Berstvorrichtung (22) ist aus einem Einlegerelement (24) und einer Berstmembran (26) gebildet. Das Einlegerelement (24) weist eine Bersthilfe (38) mit einer Schneidgeometrie (40) auf, die der Berstmembran (26) zugeordnet ist. Die Bersthilfe (38) steht in Richtung der Berstmembran (26) über eine vom Einlegerelement (24) definierte Ebene hervor.

## Beschreibung

Die Erfindung betrifft ein Zellgehäuse für einen Batteriezellkörper, das Seitenwände und eine an einer der Seitenwände angeordneten Berstvorrichtung aufweist.

Batteriezellen, auch Akkumulatorzellen genannt, dienen der chemischen Speicherung von elektrischer Energie. Eine der bekanntesten Batteriezellen ist dabei die Lithium-Ionen-Batteriezelle.

Typischerweise umfasst eine Batteriezelle mindestens einen Batteriezellkörper in Form eines Elektrodenwickels oder eines Elektrodenstapels, der wiederum aus mindestens einer positiven Elektrode, mindestens einer negativen Elektrode und mindestens einem zwischen der positiven und der negativen Elektrode angeordneten Separator gebildet ist. Der Batteriezellkörper kann zusätzlich noch eine Isolatorfolie aufweisen, die um den Elektrodenwickel oder Elektrodenstapel gewickelt ist. Zur Ausbildung einer Batteriezelle wird der Batteriezellkörper in ein Zellgehäuse eingesetzt. Je nach Bauform des Zellgehäuses ist die Batteriezelle in Form einer Rundzelle, einer Pouch-Zelle oder einer prismatischen Zelle ausgeführt.

Bei Lithium-Ionen-Batterien kann es in bestimmten Situationen, wie einem Defekt oder einer unsachgemäßen Handhabung, zur Gasbildung und zu einem daraus resultierenden Überdruck innerhalb der Batteriezelle kommen. Es ist daher bekannt, ein Überdruckventil oder eine Berstmembran im Zellgehäuse des Batteriezellkörpers vorzusehen, um die entstandenen Gase gezielt in eine Richtung abzuführen und ein thermisches Durchgehen der Batteriezelle zu verhindern. Die Berstmembran ist dabei so ausgestaltet, dass sie ab einem bestimmten Druck im Inneren des Zellgehäuses zerbirst.

Das Zellgehäuse prismatischer Zellen wird üblicherweise aus Aluminium oder einem Material mit einer Aluminiumlegierung hergestellt und die Berstmembran ist direkt in das Aluminium-Zellgehäuse eingebracht. Die Berstmembran ist daher ebenfalls aus Aluminium oder einem Material mit einer Aluminiumlegierung. Berstmembranen aus Aluminiumwerkstoffen haben üblicherweise eine auf Zug- oder Scherung belastete Sollbruchstell, die beim Erreichen der Zugfestigkeit des Aluminiumwerkstoffes kontrolliert versagen, sodass die Berstmembran kontrolliert zerbirst und einen Druckausgleich zwischen dem Inneren und dem Äußeren der Batteriezelle stattfinden kann.

Alternativ kann ein Zellgehäuse einer prismatischen Batteriezelle auch aus einem Eisenwerkstoff, also Eisen oder einem Material mit einer Eisenlegierung hergestellt werden. Wird dann die Berstmembran in das Zellgehäuse eingebracht, besteht sie, wie das Zellgehäuse auch, aus Eisen oder einem Material mit einer Eisenlegierung. Eisen weist jedoch eine deutlich höhere Zugfestigkeit auf als Aluminium, sodass eine Berstmembran aus Eisen oder mit einer Eisenlegierung ebenfalls eine deutlich höhere Zugfestigkeit aufweist als eine vergleichbare Berstmembran aus Aluminium oder einem Material mit einer Aluminiumlegierung. Folglich zerbirst eine Berstmembran aus Eisen gar nicht oder zumindest nicht so schnell und zuverlässig wie eine vergleichbare Berstmembran aus Aluminium. Eine Berstmembran, die in ein Zellgehäuse aus Eisen oder einem Material mit einer Eisenlegierung direkt eingebracht bzw. integriert ist, also einstückig mit diesem ausgebildet ist, lässt sich auf Grund der Eigenschaften von Eisen nur schwer technisch und wirtschaftlich umsetzen. Daher werden in Zellgehäuse aus Eisen Berstmembrane typischerweise als separate Bauteile in das Zellgehäuse eingesetzt.

Aufgabe der vorliegenden Erfindung ist es, ein Zellgehäuse mit einer Berstvorrichtung bereitzustellen, das die aus dem Stand der Technik bekannten Nachteile überwindet und ein zuverlässiges Bersten der Berstmembran sicherstellt.

Die Aufgabe wird erfindungsgemäß gelöst durch ein Zellgehäuse für einen Batteriezellkörper, mit Seitenwänden und einer an einer der Seitenwände angeordneten Berstvorrichtung. Die Berstvorrichtung ist aus einem Einlegerelement und einer Berstmembran gebildet. Das Einlegerelement weist eine Bersthilfe mit einer Schneidgeometrie auf, die der Berstmembran zugeordnet ist. Die Bersthilfe steht dabei in Richtung der Berstmembran über eine vom Einlegerelement definierte Ebene hervor. Vorzugsweise ist das Zellgehäuse für prismatische Batteriezellkörper ausgelegt, wobei sowohl das Zellgehäuse als auch die Berstmembran aus Eisen oder einem Material mit einer Eisenlegierung hergestellt sind.

Der Grundgedanke der Erfindung ist, die Berstmembran einer Berstvorrichtung aus Eisen oder mit einer Eisenlegierung durch eine Bersthilfe mit einer Schneidgeometrie in einem Berstfall strukturell so zu schwächen, dass die Berstmembran zuverlässig bei einem Öffnungsdruck zwischen 2 und 30 bar zerbirst. Die erfindungsgemäße Berstmembran zerbirst dabei nicht auf Grund einer durch Zug oder Scherung belasteten Sollbruchstelle, wie es bei einer Berstmembran aus Aluminium möglich ist, sondern durch Stabilitätsversagen der Berstmembran selbst. Eine Sollbruchstelle ist dabei nicht zwingend notwendig. Mit Hilfe der erfindungsgemäßen mehrteiligen Berstvorrichtung ist es also möglich, eine Berstmembran, wie das Zellgehäuse auch, aus Eisen oder aus einem Material mit einer Eisenlegierung herzustellen und ein sicheres und zuverlässiges Zerbersten bei einem gewünschten Öffnungsdruck zu erzielen. Die Berstmembran kann damit in das Zellgehäuse aus Eisen oder mit einer Eisenlegierung integriert werden, also einstückig mit diesem ausgebildet werden. Sie muss nicht als separates Bauteil ausgebildet werden, was unter anderem die Herstellungskosten des Zellgehäuses verringern werden.

Die Berstmembran erstreckt sich in Richtung eines Zellgehäuseinneren. Sie liegt somit nicht in einer Ebene mit einer der Seitenwände. So wird sichergestellt, dass die Berstmembran von der Bersthilfe beabstandet ist.

Das Einlegerelement ist ein separat ausgebildetes Bauteil, dass auf das Zellgehäuse aufgelegt und daran befestigt wird. Das Einlegerelement dringt dabei nicht in das Zellgehäuse ein. Somit muss das Zellgehäuse keine Öffnung für das Einlegerelement aufweisen und kann geschlossen ausgebildet sein. Das hat den Vorteil, dass die Stabilität und Dichtigkeit des Zellgehäuses gewährleistet bleiben. Das Einlegerelement wird also nachträglich im Bereich der Berstmembran von außen auf dem Zellgehäuse angebracht und anschließend mit dem Zellgehäuse verbunden. Das Einlegerelement erstreckt sich nicht in das Zellgehäuse und das Zellinnere hinein. Somit ist die Berstmembran auch nicht zwischen zwei Teilen des Einlegerelements eingespannt.

Erfindungsgemäß kommt die Berstmembran nur in einem Berstfall bei einem Druck im Inneren des Zellgehäuses zwischen 2 bis 30 bar mit der Bersthilfe in Kontakt bzw. liegt nur in einem Berstfall an der Bersthilfe an, sodass die Berstmembran nur dann strukturell geschwächt wird, wenn wirklich ein Berstfall vorliegt. Bei einem Druck unter 2 bar sind die Berstmembran und die Bersthilfe voneinander beabstandet, um zu verhindern, dass die Berstmembran durch die in Richtung der Berstmembran gebogene Schneidgeometrie der Bersthilfe beschädigt wird.

Gemäß einem Aspekt der Erfindung ist das Einlegerelement eine ebene, rahmenartige flach ausgebildete Platte mit einer innenliegenden Öffnung, wobei sich die Berstmembran an der Platte um die Öffnung herum abstützt. Der Rand der innenliegenden Öffnung hat dabei insbesondere die Form einer Superellipse bzw. eines Ovals mit zwei geraden, parallel zueinander verlaufenden Abschnitten und zwei gegenüberliegenden gekrümmten Abschnitten.

Das Einlegerelement hat somit im Wesentlichen zwei Funktionen. Zum einen stellt es die Bersthilfe bereit und stellt sicher, dass die Bersthilfe in einer solchen Position und in einem solchen Abstand zur Berstmembran angeordnet ist, dass ein zuverlässiges und sicheres Zerbersten der Berstmembran an einer dafür vorgesehenen Stelle sichergestellt wird. Das Einlegerelement begünstigt also ein zuverlässiges Auslösen der Berstmembran. Zum anderen stellt das Einlegerelement eine Abstützfläche für die Berstmembran dar und begrenzt dabei einerseits die Ausdehnung der Öffnung der Berstmembran in einem Berstfall und stabilisiert andererseits das Zellgehäuse nach einem Berstfall. Das Einlegerelement ist dazu eingerichtet zu verhindern, dass die Berstmembran unkontrolliert weit aufreißt und ggf. die Seitenwände des Zellgehäuses ungewollt in einem Berstfall durch das Aufreißen der Berstmembran beschädigt werden. Die Öffnungsfläche des Berstelements im Falle eines Berstens beträgt 20 bis 5.000 mm². Im Umkehrschluss bedeutet das, dass die innenliegende Öffnung des Einlegerelements mindestens 20 bis 5.000 mm² groß ist.

Gemäß einem weiteren Aspekt der Erfindung ist die Bersthilfe einstückig mit dem Einlegerelement am Rand der Öffnung ausgebildet. Mit anderen Worten geht die Bersthilfe aus dem Rand der Öffnung des Einlegerelements hervor. Damit wird sichergestellt, dass es keine Verbindungsstellen zwischen der Bersthilfe und dem Einlegerelement gibt, die eine ungewollte Sollbruchstelle darstellen können und die im schlimmsten Fall dazu führen könnten, dass die Berstmembran an der Bersthilfe zum Anliegen kommt, jedoch nicht kaputtgeht, sondern sich stattdessen die Verbindungsstelle zwischen Bersthilfe und Einlegerelement löst und die Bersthilfe abbricht, ohne dass die Berstmembran zerbirst.

Erfindungsgemäß kann die Bersthilfe eine Spitze haben, die sich in einer Draufsicht innerhalb der Öffnung des Einlegerelements befindet. Mit anderen Worten ragt die Bersthilfe in die Öffnung des Einlegerelements hinein. Das führt dazu, dass die Berstmembran die Bersthilfe nicht an einem Abstützbereich kontaktiert, an dem sich die Berstmembran dauerhaft auf dem Einlegerelement abstützt, sondern ein Kontakt zwischen der Berstmembran und der Bersthilfe, etwas weiter innerhalb der Öffnung und beabstandet von dem Abstützbereich der Berstmembran stattfindet.

Durch die Spitze der Bersthilfe und dadurch, dass die Bersthilfe in Richtung der Berstmembran über eine vom Einlegerelement definierte Ebene hervorsteht, hat die Bersthilfe in einer Draufsicht die Form einer Haifischflosse, die sich vom Rand der Öffnung in Richtung der Öffnung des Einlegerelements erstreckt. Die Bersthilfe ist nicht symmetrisch.

Die Bersthilfe ist ein einstückig mit dem Einlegerelement ausgebildeter Materialabschnitt, der aus der Ebene des Einlegerelements herausgezogen ist. Dadurch bedingt hat die Bersthilfe einen im Querschnitt trapezförmigen oder sogar dreieckigen Querschnitt, der zumindest an seiner, der Innenseite der Öffnung zugewandten Fläche bzw. Kante bzw. Spitze die Schneidgeometrie ausbildet. Die Bersthilfe und das Einlegerelement schließen dabei einen Winkel zwischen sich ein der kleiner als 180° ist.

Gemäß einem weiteren Aspekt der Erfindung ist das Einlegerelement als ein separates Bauteil ausgebildet, das mit dem Zellgehäuse an einer Verbindungsschnittstelle stoffschlüssig und/oder formschlüssig verbunden ist. Insbesondere ist das Einlegerelement mit dem Zellgehäuse durch ein stoffschlüssiges und/oder formschlüssiges Fügeverfahren fest verbunden. Damit kann sichergestellt werden, dass sich das Einlegerelement in einem Berstfall nicht vom Zellgehäuse löst. Auch ermöglicht eine stoff- bzw. formschlüssige Verbindung des Einlegerelements mit dem Zellgehäuse, dass das Einlegerelement als Verstärkung des Zellgehäuses im Bereich der Berstvorrichtung dient und den Zellgehäuse zusätzlich Stabilität gibt.

Erfindungsgemäß kann vorgesehen sein, dass die Schneidgeometrie der Bersthilfe des Einlegerelements eine Schneidkante, eine Schneidfläche und/oder eine Spitze ist. Die Schneidgeometrie ist dabei so angeordnet, dass die Berstmembran in einem Berstfall zuerst in Kontakt mit der Schneidgeometrie der Bersthilfe gelangt, wobei das Bersten der Berstmembran bei Berührung der Schneidgeometrie herbeigeführt wird. Vorteilhafterweise ist die Schneidgeometrie der erste und insbesondere auch der einzige Teil der Bersthilfe, der kurz vor und/oder beim Bersten der Berstmembran mit dieser in Kontakt kommt.

Gemäß einem weiteren Aspekt der Erfindung ist die Berstmembran einstückig mit dem Zellgehäuse ausgebildet. Damit kann vermieden werden, eine Verbindungsstelle zwischen der Berstmembran und dem Zellgehäuse einzubringen, die die Stabilität des Zellgehäuses schwächt und im schlimmsten Fall eine ungewollte Sollbruchstelle darstellt. Vielmehr ist die Berstmembran Teil einer Seitenwand des Zellgehäuses, wird also aus der Seitenwand selber geformt, sodass keine Verbindungsstelle zwischen der Berstmembran und dem Zellgehäuse vorhanden ist. Darüber hinaus entfällt damit ein Arbeitsschritt bei der Herstellung des Zellgehäuses und die Anzahl der separat ausgebildeten Teile kann reduziert werden. Beides führt zu einer Zeitersparnis bei der Herstellung des Zellgehäuses. Die Berstmembran wird also direkt in das Zellgehäuse eingebracht bzw. aus einer Seitenwand des Zellgehäuses geformt.

Dabei weist die Berstmembran eine konvexe Seite und eine konkave Seite auf, wobei die konvexe Seite in Richtung des Inneren des Zellgehäuses zeigt. Mit anderen Worten wird ein Teil einer Seitenwand des Zellgehäuses in Richtung des Inneren des Zellgehäuses gedrückt und stellt damit die Berstmembran dar. Diese so hergestellte Berstmembran stellt dabei ein Umkehrberstelement dar, deren Bersten darauf basiert, dass bei einem erhöhten Druck im Inneren des Zellgehäuses die Berstmembran aufgrund von Stabilitätsversagen zerbirst. Sobald im Inneren des Zellgehäuses der Druck auf einen Öffnungsdruck von 2 bis 30 bar ansteigt, wird die Berstmembran solange in Richtung des Äußeren des Zellgehäuses gedrückt, bis die Berstmembran an der Bersthilfe zum Anliegen kommt und die Berstmembran durch die Schneidgeometrie strukturell so geschwächt wird, dass sie an dieser Kontaktstelle zerbirst.

In einem Normalzustand, also einem Zustand, in dem der Druck im Inneren des Zellgehäuses unter 2 bar liegt, sind die Berstmembran und die Bersthilfe hingegen voneinander beabstandet angeordnet. Mit anderen Worten liegt die Berstmembran in einem Normalzustand nicht an der Bersthilfe an.

Da sowohl die Berstmembran als auch die Bersthilfe beide eine Krümmung aufweisen, sind die Berstmembran und die Bersthilfe erfindungsgemäß nicht parallel zueinander angeordnet.

Gemäß einem weiteren Aspekt der Erfindung weist das Zellgehäuse eine Wandstärke w1 und die Berstmembran eine Wandstärke w2 auf, wobei die Wandstärke w2 der Berstmembran zumindest in einem Bereich der Berstmembran geringer ist als die Wandstärke w1 des Zellgehäuses. Der Bereich, in dem die Berstmembran eine geringere Wandstärke w2 aufweist als die Wandstärke des Zellgehäuses w1, dient als eine Art Sollbruchstelle, an der die Berstmembran bei Anliegen an der Bersthilfe zerbirst. Die Wandstärke w1 des Zellgehäuses beträgt dabei 0,1 bis 2 mm. Die Wandstärke im Bereich der Berstvorrichtung ist jedoch größer, da sich die Wandstärke dort aus der der Wandstärke w2 der Berstmembran, die an dieser Stelle im Wesentlichen der Wandstärke w1 des Zellgehäuses entspricht, und der Wandstärke w3 des Einlegerelements zusammensetzt. Das Einlegerelement weist eine Wandstärke w3 von 0,2 bis 3 mm auf, sodass die Gesamtwandstärke im Abstützbereich zwischen 0,3 bis 5 mm liegt.

Gemäß einem weiteren Aspekt der Erfindung bedeckt das Einlegerelement nur einen Teil einer Seitenwand des Zellgehäuses. Insbesondere weist das Zellgehäuse vier Seitenwände auf, wobei sich jeweils zwei Seitenwände parallel gegenüberliegen und so einen rechteckigen Querschnitt des Zellgehäuses ausbilden. Das Zellgehäuse hat somit zwei kurze Seiten und zwei lange Seiten, die sich jeweils gegenüberliegen. Das Einlegerelement ist vorteilhafterweise auf einer der beiden kurzen Seiten des Zellgehäuses angeordnet und weist im Wesentlichen die gleich Breite auf wie die kurzen Seiten, bedeckt aber nur einen Teil der Länge der kurzen Seite. Insbesondere bedeckt das Einlegerelement weniger als die Hälfte der Länge der kurzen Seite. Grundsätzlich ist es allerdings selbstverständlich möglich, dass das Einlegerelement auch mehr als die Hälfte der Länge und/oder Breite einer Seitenfläche bedeckt.

Weitere Merkmale und Vorteile der Erfindung ergeben sich aus der folgenden Beschreibung und aus den beigefügten Zeichnungen, auf die Bezug genommen wird. In den Zeichnungen zeigen:
- Figur 1 eine schematische Darstellung eines erfindungsgemäßen Zellgehäuses mit einer Berstvorrichtung;
- Figur 2 eine Draufsicht der Berstvorrichtung aus Figur 1;
- Figur 3 eine isometrische Seitenansicht eines Einlegerelements der Berstvorrichtung aus Figur 1; und
- Figur 4 eine Querschnittsansicht entlang der Ebene A-A der Berstvorrichtung aus Figur 2 mit einem Berstelement und einer Berstmembran.

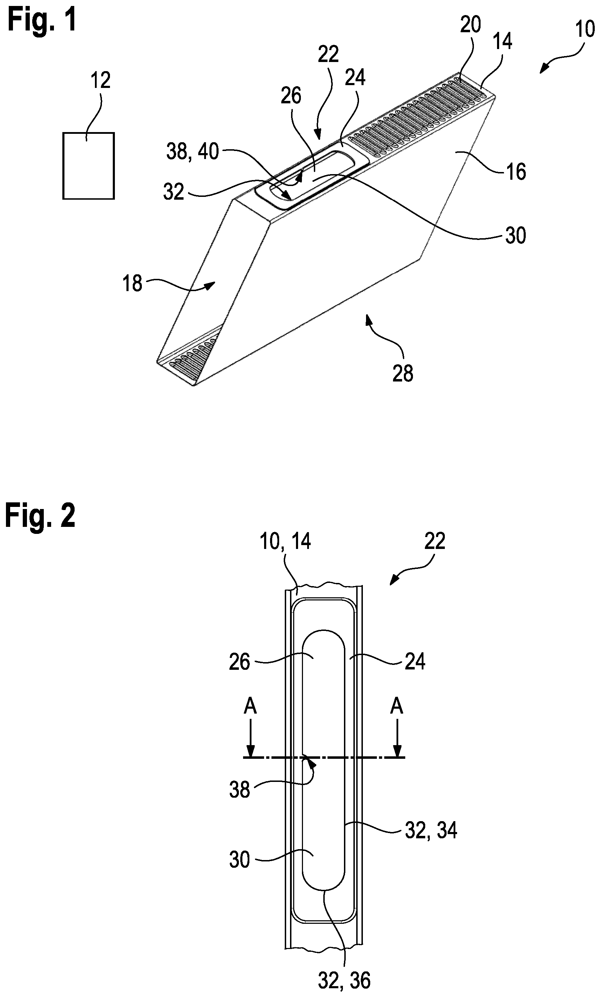

Figur 1 zeigt ein Zellgehäuse 10 für einen Batteriezellkörper 12, das insbesondere als ein prismatisches Zellgehäuse ausgebildet ist.

Das Zellgehäuse 10 weist einen rechteckigen Querschnitt auf und hat zwei kurze Seiten, die durch die beiden Seitenwände 14 gebildet werden und zwei lange Seiten, die durch die beiden Seitenwände 16 gebildet werden. Die vier Seitenwände 14, 16 umschließen ein Inneres 18 des Zellgehäuses 10.

Das Zellgehäuse 10 besteht aus einem Eisenwerkstoff, also Eisen oder einem Material, dass eine Eisenlegierung aufweist.

Hergestellt wird das Zellgehäuse 10 durch Umformen einer Platine oder durch Rollumformen eines Metallblechs, wobei eine Seitenwand 14, 16 in einen 90° Winkel zu einer benachbarten Seitenwand 16, 14 gebogen wird, sodass der Biegewinkel zwischen zwei Seitenwänden 14, 16 immer 90° beträgt. Der entsprechende Biegeradius zwischen zwei Seitenwänden 14, 16 liegt zwischen 0,1 bis 10 mm.

Das Zellgehäuse 10 in seiner finalen Form weist eine Wandstärke w1 von 0,1 bis 2 mm auf.

Sowohl die beiden Seitenwände 14, als auch die beiden Seitenwände 16 des Zellgehäuses 10 können Sicken 20 zur Erhöhung der Steifigkeit aufweisen. In der Figur 1 weisen die beiden Seitenwände 14 eine Vielzahl von parallel zueinander angeordneten Sicken 20 auf.

Das Zellgehäuse 10 weist eine Berstvorrichtung 22 auf, die an einer der beiden Seitenwände 14 angeordnet ist. Selbstverständlich kann die Berstvorrichtung 22 auch in einer der anderen Seitenwände 14, 16 angeordnet sein.

Die Berstvorrichtung 22 ist aus einem Einlegerelement 24 und einer Berstmembran 26 gebildet, wobei die Berstmembran 26 dazu eingerichtet ist, in einem Berstfall zu bersten und einen Druckausgleich zwischen dem Inneren 18 des Zellgehäuses 10 und einem Äußeren 28 des Zellgehäuses 10 zu ermöglichen.

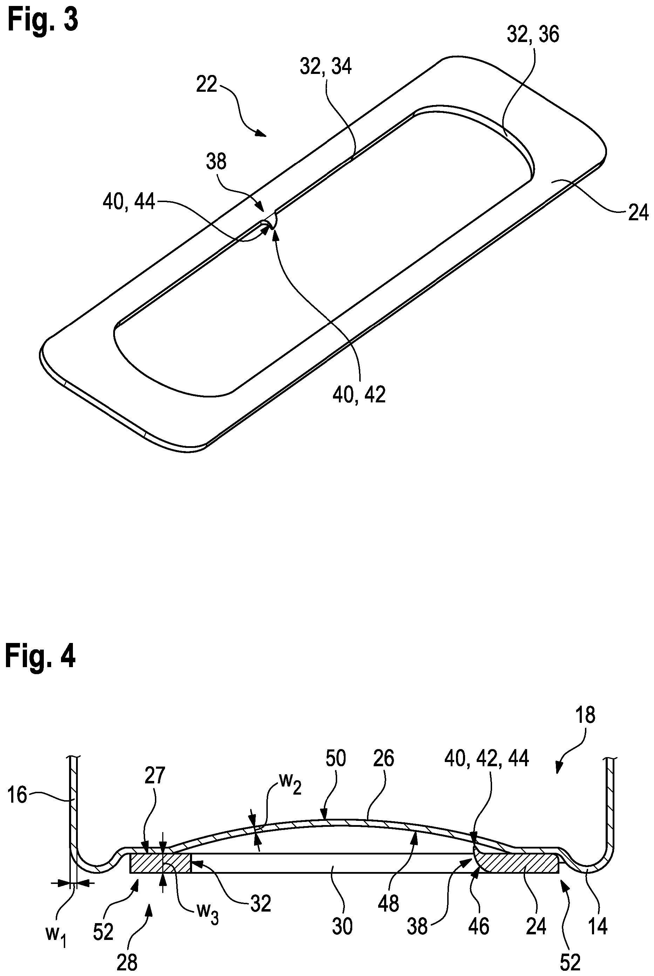

Das Einlegerelement 24 ist als separates Bauteil ausgebildet und dient unter anderem der Abstützung der Berstmembran 26. Dazu weisen das Einlegerelement 24 und die Berstmembran 26 miteinander korrespondierende Abstützbereiche 27 auf, an denen die Berstmembran 26 an dem Einlegerelement 24 anliegt und sich abstützt. Diese Abstützbereiche 27 sind besonders gut in der Figur 4 zu erkennen.

Das Einlegerelement 24 ist, wie das Zellgehäuse 10 auch, aus einem Eisenwerkstoff gebildet, insbesondere aus Eisen oder einem Material, das eine Eisenlegierung aufweist.

Wie besonders gut in Figur 1 zu erkennen ist, bedeckt das Einlegerelement 24 nur einen Teil der Seitenwand 14. Das Einlegerelement 24 erstreckt sich in Querrichtung nahezu vollständig über die Seitenwand 14, während es in Längsrichtung nur einen Teil der Seitenwand 14 bedeckt.

Im Folgenden wird das Einlegerelement 24, das in den Figuren 2 und 3 besonders gut zu erkennen ist, genauer beschrieben.

Das Einlegerelement 24 ist eine ebene, rechteckige Platte, die vier abgerundete Ecken aufweist und eine Wandstärke w3 von 0,2 bis 3 mm hat.

In der Mitte des Einlegerelements 24 befindet sich eine innenliegende Öffnung 30, innerhalb der, in einer Draufsicht, die Berstmembran 26 angeordnet ist. Die Öffnung 30 weist einen Rand 32 auf, der eine superelliptische Form aufweist oder ein Oval aus Kreisbögen und Geraden ist. Genauer gesagt hat der Rand 32 zwei gegenüberliegende parallel zueinander verlaufende gerade Abschnitte 34 und zwei ebenfalls gegenüberliegende gekrümmte oder gebogene Abschnitte 36.

Die Öffnung 30 ist mittig im Einlegerelement 24 angeordnet, sodass das Einlegerelement 24 achsensymmetrisch entlang einer Läng- und einer Querachse ist.

An einer der beiden geraden Abschnitte 34 des Rands 32 der Öffnung 30 ist eine Bersthilfe 38 einstückig mit dem Einlegerelement 24 ausgebildet.

Die Bersthilfe 38 dient dazu, die Berstmembran 26 in einem Berstfall zum Bersten zu bringen. Die Bersthilfe 38 muss die Berstmembran 26 daher strukturell so schwächen können, dass die Berstmembran 26 zumindest an einer Stelle kaputtgeht, um einen Gasaustausch zwischen dem Inneren 18 und dem Äußeren 28 des Zellgehäuses zu ermöglichen.

Die Bersthilfe 38 befindet sich im Wesentlichen mittig an einem der beiden geraden Abschnitte 34 des Rands 32 und erstreckt sich vom Rand 32 in Richtung der Mitte der Öffnung 30. Die Bersthilfe 38 stellt damit eine Art Ausbuchtung des Rands 32 der Öffnung 30 dar.

Bei der Betrachtung des Querschnitts der Bersthilfe, wie er in Figur 4 dargestellt ist, wird deutlich, dass die Bersthilfe 38 nicht nur in die Öffnung 30 hineinragt, sondern auch in Richtung der Berstmembran 26 über eine vom Einlegerelement 24 definierte Ebene hervorsteht. Anders ausgedrückt ist die Bersthilfe 38 aus der Ebene des Einlegerelements 24 herausgebogen und zeigt einerseits in Richtung des Inneren 18 des Zellgehäuses 10, also in Richtung der Berstmembran 26 und andererseits zur Mitte der Öffnung 30 hin.

Durch diese Ausrichtung und Anordnung der Bersthilfe 38 wird einerseits sichergestellt, dass die Berstmembran 26 in einem Berstfall mit Sicherheit zum Anliegen an der Bersthilfe 38 kommt und andererseits, dass die Berstmembran 26 nicht an einer unerwünschten Stelle versehentlich durch die Bersthilfe 38 beschädigt wird.

Um ein zuverlässiges Bersten der Berstmembran 26 sicherzustellen, weist die Bersthilfe 38 eine Schneidgeometrie 40 auf, die der Berstmembran 26 zugeordnet ist und an der die Berstmembran 26 in einem Berstfall zum Anliegen kommt.

Die an der Bersthilfe 38 angeordnete Schneidgeometrie 40 kann dabei grundsätzlich eine Schneidkante, eine Schneidfläche und/oder eine Spitze sein.

Die in den Figuren 3 und 4 dargestellte Bersthilfe 38 weist sowohl eine als Spitze 42 ausgebildete Schneidgeometrie 40 als auch eine als Schneidkante 44 ausgebildete Schneidgeometrie 40 auf. Durch die als Spitze 42 ausgeführte Schneidgeometrie 40 hat die Bersthilfe 38 in einer Draufsicht eine im Wesentlichen dreieckige Form. Die Form ähnelt dabei der einer Haifischflosse.

Sowohl die Schneidkante 44, als auch die Spitze 42 sind in Richtung der Berstmembran 26 geneigt und liegen somit außerhalb der Ebene, die vom Einlegerelement 24 definiert wird.

Da die Bersthilfe 38 einstückig mit dem Einlegerelement 24 ausgebildet ist und in Richtung der Berstmembran 26 gebogen bzw. umgeformt ist, ist der Rand 32, an der Stelle, an der die Bersthilfe 38 aus dem Einlegerelement 24 hervorgeht, nicht senkrecht zu dem Einlegerelement 24, sondern weist eine Biegung 46 auf. Anders ausgedrückt fehlt eine Ecke des Rands 32. Diese Biegung 46 ist auf die Materialumformung des Einlegerelements 24 bei der Ausbildung der Bersthilfe 38 aus dem Einlegerelement 24 zurückzuführen.

Figur 4 zeigt die Berstvorrichtung 22 der Figur 2 im Querschnitt entlang der A-A Achse. Aus ihr geht dir Form der Berstmembran 26 besonders gut hervor.

Die Berstmembran 26 ist einstückig mit dem Zellgehäuse 10 ausgebildet und stellt somit einen Teil der Seitenwand 14 des Zellgehäuses 10 dar.

Die Berstmembran 26 weist eine gekrümmte Struktur auf, sodass sie eine konvexe Seite 48 und eine konkave Seite 50 aufweist. Die Berstmembran 26 ist so aus dem Zellgehäuse 10 geformt, dass die konkave Seite 50 der Berstmembran 26 in Richtung des Inneren 20 des Zellgehäuses 10 zeigt, die Berstmembran 26 ist also nach Innen gedrückt.

Durch die gekrümmte Form der Berstmembran 26 kommt diese im Normalzustand, wie er in Figur 4 dargestellt ist, nicht in Kontakt mit der Bersthilfe 38. Im Normalzustand sind die Berstmembran 26 und die Bersthilfe 38 also voneinander beabstandet angeordnet.

Erst in einem Berstfall, in dem der Druck im Inneren 18 des Zellgehäuses 10 in einem Bereich zwischen 2 und 30 bar liegt, kommt es zu einem Kontakt zwischen der Berstmembran 26 und der Bersthilfe 38, genauer gesagt zwischen der Berstmembran 26 und der Schneidgeometrie 40, sodass die Berstmembran 26 durch die Schneidgeometrie 40 der Bersthilfe 38 strukturell beschädigt wird, dadurch zerbirst und ein Druckausgleich zwischen dem Inneren 18 des Zellgehäuses 10 und dem Äußeren 28 des Zellgehäuses 10 stattfinden kann. Die Öffnungsfläche der Berstmembran liegt dabei zwischen 20 und 5.000 mm².

Das Bersten der Berstmembran 26 basiert hier auf dem Prinzip des Stabilitätsversagens, da die Berstmembran 26 nicht an einer Sollbruchstelle zerbirst, sondern da zerbirst, wo sie auf Grund des Kontakts mit der Bersthilfe 38 strukturell geschwächt wird. Aus diesem Grund stellt die Berstmembran 26 ein Umkehrberstelement darstellt. Besonders wichtig für das Wirkprinzip ist daher, dass die Berstmembran 26 nur in einem Berstfall an der Bersthilfe 38 und deren Schneidgeometrie 40 zur Anlage kommt.

Um das Bersten der Berstmembran 26 zu erleichtern und zu verbessern, ist die Wandstärke w2 der Berstmembran 26 zumindest in einem Bereich der Berstmembran 26 geringer als die Wandstärke w1 des Zellgehäuses. Der Bereich, in dem die Wandstärke w2 der Berstmembran 26 geringer ist, als die Wandstärke w1 des Zellgehäuses 10 stellt eine Art Sollbruchstelle der Berstmembran 26 dar, an der die Berstmembran 26 bevorzugt zerbirst.

Um dem Zellgehäuse im Bereich der Berstvorrichtung 22 zusätzliche Stabilität zu geben, stützt sich einerseits die Berstmembran 26 an zwei Abstützbereichen 27 am Einlegerelement 24 ab und andererseits ist das Einlegerelement 24 über Verbindungsschnittstellen 52 mit dem Zellgehäuse 10 stoff- und/oder formschlüssig verbunden.

Die Verbindungsschnittstellen 52 sind so ausgebildet, dass das Einlegerelement 24 bündig mit dem äußeren Rand des Zellgehäuses 10 abschließt und kein Überstand des Einlegerelements 24 über das Zellgehäuse 10 vorliegt. Insbesondere sind die Verbindungsschnittstellen 52 dazu stufenförmig ausgebildet, sodass das Einlegerelement 24 in die Verbindungsschnittstellen 52 eingelegt werden kann. Vorzugsweise sind die Verbindungsschnittstellen 52 so dimensioniert, dass das Einlegerelement 24 nicht nur an den Abstützbereichen 27 die Berstmembran 26 und damit das Zellgehäuse 10 kontaktiert, sondern auch an seitlichen Bereichen des Einlegerelements 24 ein Kontakt zu den Verbindungsschnittstellen 52 des Zellgehäuses 10 hergestellt wird.

## Patentansprüche

1. Zellgehäuse (10) für einen Batteriezellkörper (12), mit Seitenwänden (14, 16) und einer an einer der Seitenwände (14, 16) angeordneten Berstvorrichtung (22), die aus einem Einlegerelement (24) und einer Berstmembran (26) gebildet ist,
wobei das Einlegerelement (24) eine Bersthilfe (38) mit einer Schneidgeometrie (40) aufweist, die der Berstmembran (26) zugeordnet ist, und wobei die Bersthilfe (38) in Richtung der Berstmembran (26) über eine vom Einlegerelement (24) definierte Ebene hervorsteht.

2. Zellgehäuse (10) nach Anspruch 1, **dadurch gekennzeichnet, dass** das Einlegerelement (24) eine ebene, rahmenartigen Platte mit einer innenliegenden Öffnung (30) ist, wobei die Berstmembran (26) sich an der Platte um die Öffnung (30) herum abstützt.

3. Zellgehäuse (10) nach Anspruch 2, **dadurch gekennzeichnet, dass** die Bersthilfe (38) einstückig mit dem Einlegerelement (24) am Rand (32) der Öffnung (30) ausgebildet ist.

4. Zellgehäuse (10) nach Anspruch 3, **dadurch gekennzeichnet, dass** die Bersthilfe (38) eine Spitze (42) hat, die sich in einer Draufsicht innerhalb der Öffnung (30) befindet.

5. Zellgehäuse (10) nach einem der Ansprüche 2 bis 4, **dadurch gekennzeichnet, dass** die Bersthilfe (38) ein einstückig mit dem Einlegerelement (24) ausgebildeter Materialabschnitt ist, der aus der Ebene des Einlegerelements (24) herausgebogen ist.

6. Zellgehäuse (10) nach einem der vorhergehenden Ansprüche, **dadurch gekennzeichnet, dass** das Einlegerelement (24) als ein separates Bauteil ausgebildet ist, dass mit dem Zellgehäuse (10) an einer Verbindungsschnittstelle (52) stoffschlüssig und/oder formschlüssig verbunden ist.

7. Zellgehäuse (10) nach einem der vorhergehenden Ansprüche, **dadurch gekennzeichnet, dass** die Schneidgeometrie (40) eine Schneidkante (44), eine Schneidfläche und/oder eine Spitze (42) ist.

8. Zellgehäuse (10) nach einem der vorhergehenden Ansprüche, **dadurch gekennzeichnet, dass** die Berstmembran (26) einstückig mit dem Zellgehäuse (10) ausgebildet ist.

9. Zellgehäuse (10) nach einem der vorhergehenden Ansprüche, **dadurch gekennzeichnet, dass** die Berstmembran (26) eine konvexe Seite (48) und eine konkave Seite (50) aufweist, wobei insbesondere die konvexe Seite (50) in Richtung des Inneren (18) des Zellgehäuses (10) zeigt.

10. Zellgehäuse (10) nach einem der vorhergehenden Ansprüche, **dadurch gekennzeichnet, dass** die Berstmembran (26) und die Bersthilfe (38) in einem Normalzustand voneinander beabstandet angeordnet sind.

11. Zellgehäuse (10) nach einem der vorhergehenden Ansprüche, **dadurch gekennzeichnet, dass** das Zellgehäuse (10) eine Wandstärke w1 und die Berstmembran (26) eine Wandstärke w2 aufweist, wobei die Wandstärke w2 der Berstmembran (26) zumindest in einem Bereich der Berstmembran (26) geringer ist als die Wandstärke w1 des Zellgehäuses (10).

12. Zellgehäuse (10) nach einem der vorhergehenden Ansprüche, **dadurch gekennzeichnet, dass** das Einlegerelement (24) nur einen Teil einer Seitenwand (14, 16) des Zellgehäuses (10) bedeckt.
